# EUROPÄISCHE PATENTSCHRIFT

(11) **EP 0 508 193 B1**
(45) Veröffentlichungstag und Bekanntmachung des Hinweises auf die Patenterteilung: **24.08.1994**
(21) Anmeldenummer: 92104942.5
(22) Anmeldetag: 21.03.1992
(51) Int. Cl.: B62B 3/10, G07F 7/06

(54) **Transportwagen mit Münzschloss**
Trolley with coin operated lock
Chariot pour le transport de marchandises muni d'un dispositif de consigne

(30) Priorität: 06.04.1991 DE 4111178
(43) Veröffentlichungstag der Anmeldung: 14.10.1992
(73) Patentinhaber: SYSTEC Ausbausysteme GmbH, D-82178 Puchheim (DE)
(72) Erfinder: Sonnendorfer, Horst, W-8031 Eichenau (DE); Wieth, Franz, Dipl.-Ing., W-8031 Eichenau (DE)
(74) Vertreter: Brommer, Hans Joachim, Dr.-Ing.

(56) Entgegenhaltungen:
- EP-A- 0 157 943
- EP-A- 0 199 274
- EP-A- 0 442 016
- FR-A- 2 582 607

## Beschreibung

Die Erfindung betrifft einen Transportwagen, insbesondere Einkaufswagen, der in einen gleichartigen Wagen einschiebbar und mit einer zur Aufnahme von Waren geeigneten Einrichtung, im allgemeinen in Form eines Korbes, und mit einem an seitlichen Tragarmen über endständige Griffkappen montierten Griff zum Verfahren des Wagens ausgestattet ist, wobei der Wagen in Griffnähe ein Münzschloß und einen Schlüssel zum Aneinanderschließen von in einer Parkkolonne stehenden Wagen bzw. zur Freigabe des vorzugsweise am Kolonnenende stehenden Wagens gegen Eingabe einer Pfandmünze aufweist und das Münzschloß die Pfandmünze bei der Wagenfreigabe verriegelt, beim Wiederanschließen des Wagens freigibt.

Transportwagen mit diesem Pfandsystem sind im Prinzip durch die DE-A 25 54 916 bekannt geworden und inzwischen in unterschiedlichen Ausführungsformen auf dem Markt. Da die Freigabe eines Wagens nur gegen Einstecken einer Pfandmünze in den Münzautomat möglich ist und der Benutzer die Münze nur dann zurückerhält, wenn er den Wagen an einer der verschiedenen Sammelstellen wieder ankoppelt, stehen die Wagen nicht mehr nutzlos herum. Man spart Personal zum Suchen, Sammeln und Zurückbringen der Wagen und kommt auch mit einer geringeren Anzahl aus, weil die nicht benutzten Wagen stets an den Bedarfspunkten konzentriert sind.

Bei den meisten Wagen ist das Münzschloß an dem Griffrohr montiert, mit dem der Wagen verfahren werden kann, vgl. DE-A 29 00 367 und US-A 4 683 609. Diese Anordnung hat aber den Nachteil, daß die Zugänglichkeit des Korbes beeinträchtigt wird. Darüber hinaus ragt das Münzschloß bei solchen Einkaufswagen, die mit einem Kindersitz ausgestattet sind, störend in den Sitzbereich hinein. Schließlich besteht bei dieser Positionierung auch die Gefahr, daß die Münzschlösser um die Griffachse verdreht werden.

Daneben ist es durch die DE-A 33 24 962 bekannt, das Münzschloß außen an einer Korbseitenwand zu befestigen. Dabei besteht aber die Gefahr, daß man mit dem seitlich vorstehenden Schloßgehäuse hängen bleibt, insbesondere dann, wenn Gegenverkehr herrscht, weil dann die Münzautomaten jeweils an den einander zugewandten Korbseiten vorstehen. Dieser erhöhte Sicherheitsabstand wird vom Kunden normalerweise nicht erwartet, so daß es in den mitunter engen Passagen in Supermärkten häufig zu Kollisionen kommt.

Um diese Probleme zu beseitigen, wird in der EP 199 274 vorgeschlagen, das Münzschloß im Übergangsbereich zwischen Griff und Tragarm anzuordnen, wobei es sich sowohl am Griff als auch am Tragarm abstützen soll, damit eine mutwillige Verdrehung ausgeschlossen ist.

Die Montage des Schlosses in diesem Bereich verlangt aber eine genaue maßliche Anpassung des Münzschloß-Gehäuses an die geometrischen Gegebenheiten verschiedener Teile. Da hier je nach Wagenhersteller unterschiedliche Formen für den Grifftragarm, für die Griffkappe wie auch für die Lage des Griffes relativ zu den Tragarmen auf dem Markt sind, muß das bekannte Münzschloß durch unterschiedlich geformte Gehäuse an die auf dem Markt befindlichen Transportwagen angepaßt werden.

Hiervon ausgehend liegt die Aufgabe der vorliegenden Erfindung darin, den eingangs beschriebenen Transportwagen dahingehend zu verbessern, daß er sich durch universelle Eignung für unterschiedliche Wagentypen auszeichnet. Des weiteren soll die Zugänglichkeit des Korbes zum Be- und Entladen wie auch die Eignung für einen eventuellen Kindersitz gewahrt bleiben. Nicht zuletzt soll die erfindungsgemäße Lösung auch ein leichtes Nachrüsten von bereits auf dem Markt befindlichen Transportwagen erlauben.

Diese Aufgabe wird erfindungsgemäß dadurch gelöst, daß die Griffkappe an dem einen Tragarm geteilt ist in ein der Griffmontage dienendes Endstück einerseits und in ein davon distanziertes, weiter vorn am Tragarm angeordnetes und das Münzschloß tragendes Kappenteil andererseits.

Dadurch wird das Münzschloß aus der zuletzt beschriebenen Eckposition heraus nach vorn verlagert, wird also unabhängig von der Griffmontage und braucht lediglich noch an die Geometrie des Tragarmes, die nur sehr geringen Abweichungen unterliegt, angepaßt zu werden. Dagegen bleibt die individuelle Befestigung des Griffrohres durch den Hersteller unverändert erhalten.

Des weiteren hat die erfindungsgemäße Positionierung des Münzschlosses den Vorteil, daß die Länge des Haltegriffes im Gegensatz zu der zuletzt besprochenen Lösung nicht verkürzt wird. Der Benutzer kann den Wagen also weit außen anfassen und dadurch mit einem größeren Hebelarm manövrieren. Dies ist vor allem bei voll beladenem Einkaufswagen oder beim engen Kurvenfahren eine Erleichterung.

Der Abstand zwischen Münzschloß und Haltegriff wird zweckmäßig so gewählt, daß der Benutzer den Haltegriff bequem umfassen kann, ohne am Münzautomat anzustoßen.

Zweckmäßig ist das Münzschloß im wesentlichen oberhalb des Tragarmes angeordnet, damit das Einstecken der Pfandmünze zum Abkoppeln bzw. das Einstecken des Schlüssels zum Wiederankoppeln gut im Blickbereich liegt.

Die beschriebene Aufteilung der Griffkappe bietet darüber hinaus den Vorteil, daß der Schlüssel nicht mehr wie bisher am Münzschloß, sondern außerhalb desselben, insbesondere an dem Endstück der Griffkappe befestigt werden kann, das am rückwärtigen Ende des Tragarmes sitzt. Dadurch kommt es zu einer erwünschten Distanzierung zwischen Münzschloß und Schlüssel, was folgenden Hintergrund hat: Die Münschlösser sind im Lauf der letzten Jahre immer kompakter geworden. Dadurch besteht die Gefahr, daß der Schlüssel, der üblicherweise an einer Kette hängt, die den Abstand zwischen ineinandergeschobenen Einkaufswagen überbrücken muß, in den eigenen Münzautomat hineingesteckt werden kann. Der Benutzer könnte dann sein Münzpfand zurückerhalten, ohne den Wagen an der Sammelstelle anzukoppeln. Durch die getrennte Positionierung der Kette mit dem Schlüssel einerseits und des Münzschlosses andererseits kann diese Gefahr mühelos beseitigt werden.

Üblicherweise wird jeder Tragarm aus zwei etwa parallelen, mehr oder weniger horizontal verlaufenden Stäben gebildet, die an ihren Enden U-förmig einstückig zusammenlaufen. Das Kappenteil mit dem Münzschloß braucht dann lediglich an seiner Unterseite einen entsprechenden Schlitz aufweisen, mit dem es beide Stäbe umfaßt und an den Stäben verklemmbar ist.

Besonders zweckmäßig ist es, wenn das für die Aufnahme des Münzschlosses vorgesehene Kappenteil integraler Bestandteil des Münzschloß-Gehäuses ist, also unmittelbar an das Gehäuse angeformt wird.

Weitere Merkmale und Vorteile der Erfindung ergeben sich aus der nachfolgenden Beschreibung von Ausführungsbeispielen anhand der Zeichnung; dabei zeigt
- Fig. 1: eine schematische Darstellung eines Einkaufswagens mit Münzschloß;
- Fig. 2: einen vergrößerten Ausschnitt des Tragarmes mit Münzschloß in der Seitenansicht und
- Fig. 3: den vergrößerten Ausschnitt von Fig. 2 in einer Ansicht von oben.

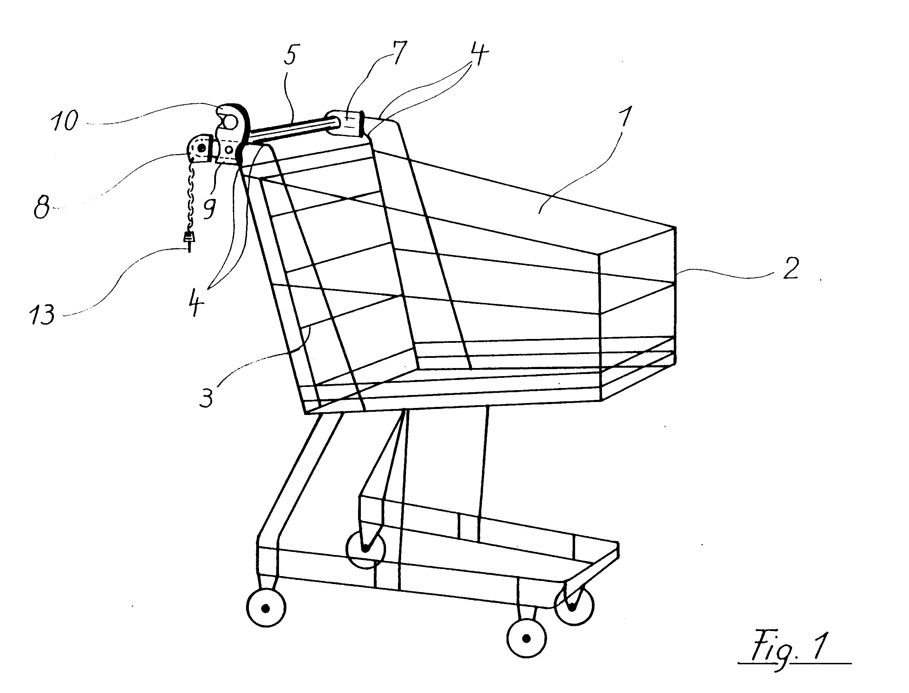

In Fig. 1 erkennt man schematisch einen Einkaufswagen 1 mit einem sich nach vorn verjüngenden Korb 2, der an seiner Rückseite durch eine oben gelagerte, in das innere des Korbes verschwenkbare Klappe 3 begrenzt ist. Am oberen rückwärtigen Ende des Korbes 2 läuft beidseits je ein Grifftragarm 4 nach hinten. Jeder Grifftragarm ist von einer Griffkappe umfaßt, über die ein Haltegriff 5 an den beiden Tragarmen befestigt wird.

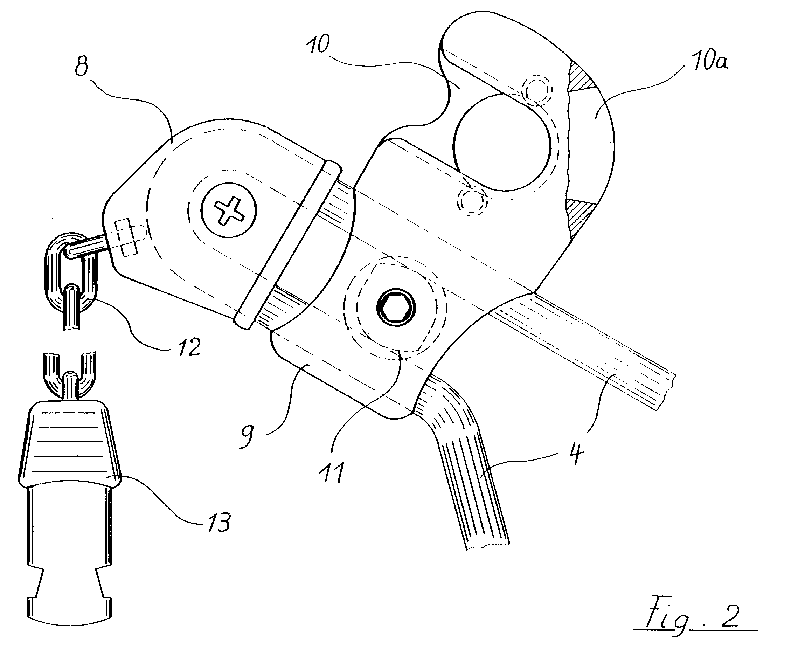

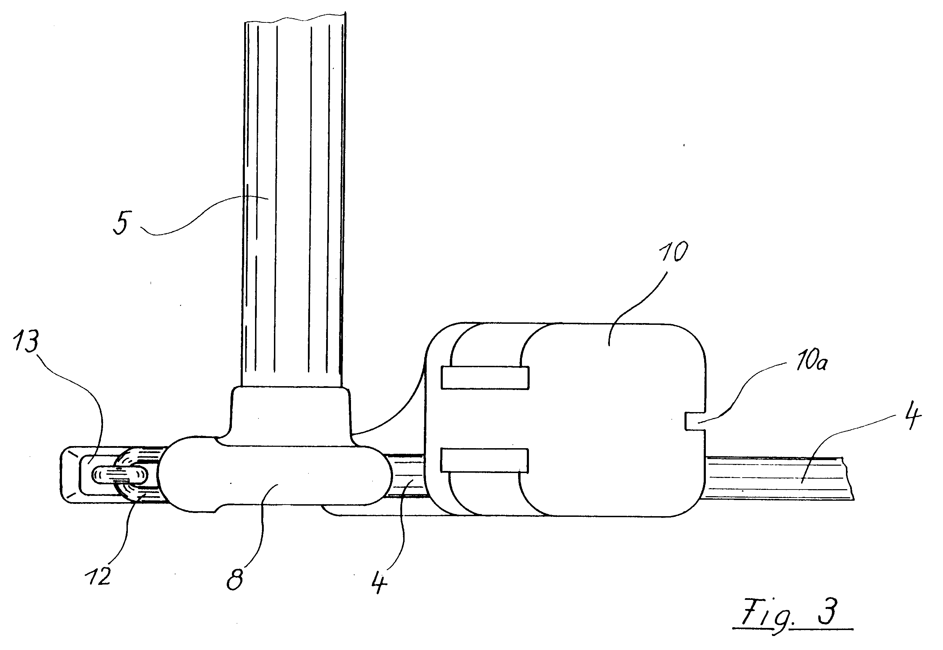

Wesentlich ist nun, daß der eine Grifftragarm ein Münzschloß 10 trägt, wie dies anhand der Fig. 2 und 3 näher beschrieben wird.

Gemäß Fig. 2 besteht der Grifftragarm 4 aus einem etwa 5 mm starken Runddraht, der an seinem rückwärtigen Ende eine U-förmige Umbiegung aufweist. Während der in Fig. 1 vordere Tragarm nahezu im gesamten Bereich der U-förmigen Umbiegung von einer Griffkappe 7 umschlossen ist, weist der andere, in den Fig. 2 und 3 dargestellte Tragarm ein relativ kurzes Endstück 8 auf, das in an sich bekannter Weise zur Montage des Griffes 5 dient, und davon abgesetzt, aber immer noch im Bereich der U-förmigen Umbiegung, ein Kappenteil 9, das an der Oberseite das Münzschloß 10 trägt.

Das Kappenteil 9 ist in seinem unteren Bereich geschlitzt, so daß es die beiden Drähte des Tragarmes 4 beidseitig umfaßt und mittels eines zwischen diesen Drähten verdrehbaren Exzenters 11 an dem Tragarm festgelegt werden kann. Durch die Verwendung eines solchen Exzenters, der vorzugsweise doppelseitig exzentrisch ist, können maßliche Unterschiede des Tragarmes leicht überbrückt werden.

Wie die Fig. 2 und 3 weiter zeigen, ist der an einer Kette 12 hängende Schlüssel 13 distanziert vom Münzautomat, nämlich an dem Endstück 8 befestigt. Durch diese Distanzierung ist sichergestellt, daß der Schlüssel 13 nicht in die Ankoppelöffnung 10a des eigenen Münzautomaten 10 eingesteckt werden kann.

## Patentansprüche

1. Transportwagen, insbesondere Einkaufswagen (1), der in einen gleichartigen Wagen einschiebbar und mit einer zur Aufnahme von Waren geeigneten Einrichtung, im allgemeinen in Form eines Korbes (2), und mit einem an seitlichen Tragarmen (4) über endständige Griffkappen (7, 8) montierten Griff (5) zum Verfahren des Wagens ausgestattet ist, wobei der Wagen in Griffnähe ein Münzschloß (10) und einen Schlüssel (13) zum Aneinanderschließen von in einer Parkkolonne stehenden Wagen bzw. zur Freigabe des vorzugsweise am Kolonnenende stehenden Wagens gegen Eingabe einer Pfandmünze aufweist und das Münzschloß (10) die Pfandmünze bei der Wagenfreigabe verriegelt, beim Wiederanschließen des Wagens freigibt,
dadurch gekennzeichnet,
daß die Griffkappe an dem einen Tragarm (4) geteilt ist in ein der Griffmontage dienendes Endstück (8) einerseits und in ein davon distanziertes, weiter vorn am Tragarm angeordnetes und das Münzschloß (10) tragendes Kappenteil (9) andererseits.

2. Transportwagen nach Anspruch 1,
dadurch gekennzeichnet,
daß das Münzschloß (10) im wesentlichen oberhalb des Tragarmes (4) angeordnet ist.

3. Transportwagen nach Anspruch 1 oder 2,
dadurch gekennzeichnet,
daß der Schlüssel (13) außerhalb des das Münzschloß (10) tragenden Kappenteils (9) am Wagen (1) befestigt ist.

4. Transportwagen nach einem der vorhergehenden Ansprüche,
dadurch gekennzeichnet,
daß der Schlüssel (13) mit Hilfe des Endstückes (8) am Wagen befestigt ist.

5. Transportwagen nach einem der vorhergehenden Ansprüche mit einem aus zwei etwa parallel verlaufenden Stäben bestehenden Tragarm (4),
dadurch gekennzeichnet,
daß das Kappenteil (9) mit dem Münzschloß (10) beide Stäbe umfaßt und an den Stäben verklemmt ist.

6. Transportwagen nach Anspruch 5,
dadurch gekennzeichnet,
daß die Befestigung des Kappenteils (9) mittels eines verdrehbaren, zwischen den Stäben verklemmbaren Exzenters (11) erfolgt.

7. Transportwagen nach einem der vorhergehenden Ansprüche,
dadurch gekennzeichnet,
daß das Kappenteil (9) integraler Bestandteil des Gehäuses des Münzschlosses (10) ist.

## Claims

1. A transport carriage, particularly a shopping trolley (1), which can be pushed into a like carriage and is equipped with a device suitable for receiving goods, in general in the form of a basket (2), and with a handle (5) mounted at lateral carrier arms (4) by way of terminal handle caps (7, 8) for displacing the carriage, the carriage having in the vicinity of the handle a coin-operated lock (10) and a key (13) for locking carriages standing in a parked row together and for releasing, on insertion of a deposit coin, a carriage that is standing preferably at the end of the row, the coin-operated lock (10) locking away the deposit coin on releasing the carriage and releasing it on re-locking the carriage,
characterised in that
at one end of the carrier arms (4) the handle cap (8) is divided into an end piece (8) serving for the mounting of the handle, on the one hand and a cap part (9) which is arranged at a spacing from the end piece further forwardly on the carrier arm and carries the coin-operated lock (10).

2. A transport carriage according to claim 1,
characterised in that
the coin-operated lock (10) is arranged essentially above the carrier arm (4).

3. A transport carriage according to claim 1 or 2,
characterised in that
the key (13) is secured to the carriage (1) externally of the cap part (9) carrying the coin-operated lock (10).

4. A transport carriage according to any preceding claim,
characterised in that
the key (13) is secured to the carriage (1) with the aid of the end piece (8).

5. A transport carriage according to any preceding claim, with a carrier arm (4) consisting of two rods that extend approximately parallel to each other,
characterised in that
the cap part (9) with the coin-operated lock (10) encompasses both rods and is locked on the rods.

6. A transport carrier according to claim 5,
characterised in that
the fixing of the cap part (9) ensues by way of a rotatable cam (11) which is lockable between the rods.

7. A transport carrier according to any preceding claim
characterised in that
the cap part (9) is an integral component of the housing of the coin-operated lock (10).

## Revendications

1. Chariot de transport, en particulier, chariot de magasin (1), possédant la faculté de s'encastrer dans un chariot de même type et pourvu d'un agencement convenable pour recevoir des marchandises, sous la forme généralement d'un panier et d'une unité de poignée en forme de tube (5) destinée à la conduite du chariot, reposant en appui sur des montants latéraux (4) et reçue dans des chapes d'extrémité (7, 8), dans lequel le chariot comporte, à proximité de ladite unité de poignée en forme de tube, une serrure actionnée par pièce de monnaie (10) et une clef (13) destinée, d'une part, à maintenir en un état d'interblocage en une file de rangement des chariots rassemblés en attente d'utilisation et d'autre part à permettre que le chariot, de préférence de fin de file, soit désengagé lors de l'insertion, à titre de consigne, d'une pièce de monnaie dans la serrure actionnée par pièce de monnaie (10) dans laquelle celle-ci demeurera captive pour être restituée lors du réengagement du chariot,
caractérisé en ce que,
la chape de poignée entourant l'extrémité de l'un des montants latéraux (4) est divisée en d'une part une pièce d'extrémité servant au montage de la poignée et d'autre part en une partie de chape (9) supportant la serrure actionnée par pièce de monnaie (10) et étant disposée à distance de la partie d'extrémité en un emplacement situé plus à l'avant du montant.

2. Chariot de transport selon la revendication 1, caractérisé en ce que la serrure actionnée par pièce de monnaie (10) est disposée nettement au-dessus du montant (4).

3. Chariot de transport selon la revendication 1 ou 2, caractérisé en ce que la clef (13) est fixée en dehors de la partie de chape (9) supportant la serrure actionnée par pièce de monnaie (10) disposée sur le chariot (1).

4. Chariot de transport selon l'une quelconque des revendications précédentes, caractérisé en ce que la clef (13) est fixée sur le chariot (1) au moyen de la partie d'extrémité (8).

5. Chariot de transport selon l'une quelconque des revendications précédentes, comportant un montant (4) constitué de deux barres qui s'étendent en quasi parallélisme mutuel, caractérisé en ce que la partie de chape (9) destinée à supporter la serrure actionnée par pièce de monnaie entoure lesdites deux barres en étant bloquée par celles-ci.

6. Chariot de transport selon la revendication 5, caractérisé en ce que la fixation de la partie de chape (9) est effectuée au moyen d'une came (11) apte à la déformation et venant se bloquer entre les barres.

7. Chariot de transport selon l'une quelconque des revendications précédentes, caractérisé en ce que la partie de chape (9) est solidaire du boîtier de la serrure actionnée par pièce de monnaie (10).
